Europäisches Patentamt

European Patent Office

Office européen des brevets

(11) Veröffentlichungsnummer: **0 332 931**

**A2**

# (12) EUROPÄISCHE PATENTANMELDUNG

(21) Anmeldenummer: **89103550.3**

(51) Int. Cl.⁴: **F16L 55/10**

(22) Anmeldetag: **01.03.89**

(30) Priorität: **14.03.88 DE 8803407 U**
**06.05.88 DE 3815416**

(43) Veröffentlichungstag der Anmeldung:
**20.09.89 Patentblatt 89/38**

(84) Benannte Vertragsstaaten:
**AT BE CH DE ES FR GB IT LI LU NL SE**

(71) Anmelder: **ROTHENBERGER**
**WERKZEUGE-MASCHINEN GMBH**
**Gutleutstrasse 167**
**D-6000 Frankfurt am Main(DE)**

(72) Erfinder: **Sibbertsen, Walter. Dipl.-Phys.**
**Joachim-Sahling-Weg 109**
**D-2000 Hamburg 53(DE)**
Erfinder: **Flatow, Karl-Heinz**
**Auf der Bojewiese 52**
**D-2000 Hamburg 80(DE)**

(74) Vertreter: **Zapfe, Hans, Dipl.-Ing.**
**Am Eichwald 7, Postfach 20 01 51**
**D-6056 Heusenstamm -2 (Rembrücken)(DE)**

(54) **Verfahren zum Verschliessen von Rohrleitungen durch Einfrieren und Vorrichtung zur Durchführung des Verfahrens.**

(57) Verfahren und Vorrichtung zum Verschließen von Rohrleitungen (8) durch örtlich begrenztes Einfrieren ihres Inhalts mittels eines auf die Außenwand der Rohrleitung einwirkenden Kühlmediums. Zum Zwecke einer Vermeidung giftiger und/oder anderweitig gefährlicher Gase und zur unmittelbaren Kühlung der Rohrleitung (8) entspannt man unter Druck stehende Luft auf eine Temperatur unterhalb des Gefrierpunktes des Inhaltes der Rohrleitung und richtet die entspannte Luft auf die Außenwand der Rohrleitung. Die Vorrichtung besitzt eine an der Rohrleitung anbringbare Kammer (7), die über eine Gaseintrittsöffnung (12a) mit einer Druckluftquelle verbunden ist und einen Kanal (14) aufweist, der zur Rohrleitung (8) hin offen, zur Atmosphäre hin aber bis auf eine Gasaustrittsöffnung geschlossen ist. Zwischen der Druckluftquelle und der Eintrittsöffnung (12a) der Kammer (7) ist eine Entspannungseinrichtung (5) für die Druckluft angeordnet, die vorzugsweise als Wirbelrohr (6) ausgebildet ist.

FIG.4

## Verfahren zum Verschließen von Rohrleitungen durch Einfrieren und Vorrichtung zur Durchführung des Verfahrens

Die Erfindung betrifft ein Verfahren zum Verschließen von Rohrleitungen durch örtlich begrenztes Einfrieren ihres Inhalts mittels eines auf die Außenwand der Rohrleitung einwirkenden Kühlmediums.

Derartige Verfahren sind in größerer Zahl und teilweise seit langer Zeit bekannt:

Bei einer ersten Gruppe von Verfahren kommen Vorrichtungen zum Einsatz, die aus zwei allseitig geschlossenen Halbzylinder-Schalen bestehen, durch die flüssige Kältemittel im Kreislauf umgewälzt werden oder in die ein festes Kältemittel wie Kohlensäure-Schnee eingebracht wird (US-PS 2 572 555 und GB-PS 601 278). Durch die zuletzt genannte GB-PS 601 278 ist es auch bekannt, die Wirkung festen Kohlendioxids durch die gleichzeitige Anwesenheit von Flüssigkeiten zu unterstützen, die bei den erforderlichen tiefen Temperaturen nicht selbst einfrieren, wie beispielsweise Methylalkohol. Die Wirkung derartiger Verfahren und Vorrichtungen ist jedoch wegen der zwischen dem Kältemittel und der einzufrierenden Rohrleitung vorhandenen Trennwand begrenzt. Außerdem muß die Bedienungsperson geeignete Kältemittel mit sich führen, bei Verwendung von im Kreislauf umgewälzter Kühlsole auch ein besonderes Kälteaggregat mit einem Wärmetauscher, so daß wegen des zusätzlichen Wärmedurchgangs durch die Wärmetauscherflächen ein zusätzlicher Temperaturgradient entsteht (US-PS 2 572 555).

Bei einer zweiten Gruppen von Einfrierverfahren werden Vorrichtungen verwendet, bei denen auf die Trennwand zwischen dem Kältemittel und der Rohroberfläche verzichtet wird, so daß das Kältemittel mit der einzufrierenden Rohrleitung unmittelbar in Berührung gelangt (US-PS 3 559 423 und FR-PS 1 521 628 mit Zusatzpatent 94 489). Sofern hierbei die übliche, ätzende Kühlsole verwendet wird, muß auf absolute Dichtigkeit des Kältemittelkreislaufes geachtet werden, und außerdem ist auch hier ein Kälteaggregat mit einem Wärmetauscher erforderlich (US-PS 3 559 423).

Bei einer dritten Gruppe derartiger Verfahren wird eine Vorrichtung mit einer Kammer verwendet, die gleichfalls zur Rohrleitung hin keine Trennwand aufweist, die aber gegenüber der Rohrleitung auch nur bedingt abgedichtet werden muß, weil das in seinem Endzustand gasförmige Kältemittel ohnehin in mehr oder weniger große Entfernung von der Kammer, die als sogenannte "Manschette" ausgebildet ist, in die Umgebung abgeleitet wird (GB-PS 1 209 144 und DE-PS 23 30 807. Als Kältemittel wird hierbei ein Flüssiggas verwendet, das in einem dünnwandigen Behälter unter geringem Druck in diesem Zustand gehalten werden kann. Nach der Druckentlastung tritt das Flüssiggas in noch flüssigem Zustand mit der Rohrleitung in Wechselwirkung und entzieht dieser die sogenannte Verdampfungswärme. Obwohl dieser Vorgang ein außerordentlich wirkungsvolles Einfrieren der Rohrleitung ermöglicht, ist er im Hinblick auf die zum Einsatz kommenden Flüssiggase bedenklich. Wird hierbei eine bestimmte Art von Fluor-Kohlenwasserstoffen verwendet, so sind die Abgase spätestens nach ihrem Eintreten in eine offene Flamme giftig, werden hierbei reine Kohlenwasserstoffe verwendet, so sind diese im Gemisch mit der Umgebungsluft bei bestimmten Konzentrationen explosiv, so daß die Anwendung nur im Freien oder in gut durchlüfteten Räumen empfohlen werden kann.

Für Montage- oder Reparaturarbeiten an Rohrleitungssystemen wie z.B. an wasserführenden Warmwasserheizungsanlagen wurden auch bereits die vorstehend beschriebenen Verfahren und Vorrichtungen angewandt, um bestimmte Rohrleitungsabschnitte abzusperren, ohne die übrigen Rohrleitungsabschnitte oder gar das gesamte Rohrleitungsnetz entleeren und hinterher wieder entlüften zu müssen. Dabei wird das in der Leitung befindliche Wasser unmittelbar vor und hinter der zu reparierenden Stelle zu einem Eispfropfen gefroren, der die Reparaturstelle gegen den Rest des Rohrleitungssystems dicht verschließt. Die betreffenden Arbeiten finden also in der Regel in mehr oder weniger geschlossenen Räumen statt.

Um hierbei während der Dauer der Arbeiten ein Auftauen des Eispfropfens zu verhindern, muß der Kühlvorgang weiter fortgesetzt werden. Hierbei werden je nach dem Rohrdurchmesser und Rohrwerkstoff sowie nach der Wassertemperatur unterschiedliche Mengen von verdampften Flüssiggasen an die Raumluft abgegeben. Neben dem relativ hohen Preis der bekannten Kältemittel besteht nicht nur der bereits beschriebene Nachteil einer Personengefährdung, sondern auch in erheblichem Umfange eine Umweltbeeinträchtigung, insbesondere durch die bereits genannten Fluor-Chlor-Kohlenwasserstoffe. Die bekannten "Ozonlöcher" im Bereich der Polkappen sind nur ein Teil der äußerst negativen Folgen.

Der Erfindung liegt daher die Aufgabe zugrunde, ein Verfahren der eingangs beschriebenen Gattung anzugeben, mit dem eine unmittelbare Kühlung der einzufrierenden Rohrleitung möglich ist, ohne daß hierbei giftige und/oder anderweitig gefährliche Gase (Explosionsgefahr) an die Umgebung abgegeben werden.

Die Lösung der gestellten Aufgabe erfolgt bei dem eingangs beschriebenen Verfahren erfindungsgemäß dadurch, daß man unter Druck stehende Luft auf eine Temperatur unterhalb des Gefrierpunktes des Inhalts der Rohrleitung entspannt und die entspannte Luft auf die Außenwand der Rohrleitung richtet.

Es ist natürlich bereits bekannt, daß die Temperatur komprimierter Luft bei einer adiabatischen Entspannung nach Maßgabe der Druckdifferenz absinkt. Es wurde aber überraschend festgestellt, daß man diesen an sich bekannten thermodynamischen Effekt mit ganz besonderem Vorteil beim lokalen Einfrieren von Rohrleitungen anwenden kann, so daß keine Veränderung der Umgebungsluft durch die Freisetzung von giftigen und/oder ätzenden Flüssigkeiten bzw. von giftigen und/oder brennbaren (explosiven) Gasen erfolgt.

Es ist dabei besonders vorteilhaft, wenn man der Umgebung der Rohrleitung die benötigte Luft entnimmt, diese auf einen Druck $P_1$ verdichtet, der ausreicht, um bei der Entspannung der abgekühlten Luft auf einen darunterliegenden Druck $P_2$ den Gefrierpunkt des Inhalts der Rohrleitung zu unterschreiten, der verdichteten Luft Wärme entzieht und sie nachfolgend auf den Druck $P_2$ entspannt und auf die Außenwand der Rohrleitung richtet.

Für die Durchführung eines solchen Verfahrens wird im einfachsten Fall ein Kompressor mit einem Luftkühler und einem Druckbehälter benötigt. Derartige Aggregate, die leicht zu transportieren sind, befinden sich als Druckluftquellen für Spritzpistolen oder dergleichen im Handel.

Es bedarf dann nur noch einer entsprechend konstruierten "manschette" um die entspannte und abgekühlte Luft in einen möglichst innigen Wärmeaustausch mit der einzufrierenden Rohrleitung zu bringen.

Ein besonders wirksames Verfahren zum örtlichen Einfrieren von Rohrleitungen unter Verwendung von Umgebungsluft ist gemäß einer weiteren Ausgestaltung der Erfindung dadurch gekennzeichnet, daß man die verdichtete und abgekühlte Luft zunächst im wesentlichen tangential in ein Wirbelrohr mit einem Kaltluftausgang in Form einer Blende und einem Warmluftausgang leitet und in diesem Wirbelrohr zumindest überwiegend entspannt, wobei ein Teil der entspannten Luft durch Wärmeabgabe an den übrigen Teil der entspannten Luft weiter abgekühlt und durch den Kaltluftausgang mit der Blende der einzufrierenden Rohrleitung zugeführt wird, und wobei der übrige, durch eine entsprechende Wärmeaufnahme aufgeheizte Teil der Luft durch den besagten Warmluftausgang abgeführt wird.

Auch ein solches "Wirbelrohr" ist - für sich genommen -Stand der Technik; es wird in der Literatur auch als "Ranquesches Wirbelrohr" bezeichnet (siehe Brockhaus "abc Physik", VEB F.A.

Brockhaus Verlag, Leipzig, 1973, Seite 1738, Stichwort: "Wirbelrohr"). Dieses Wirbelrohr wird auch als Kältemaschine ohne bewegliche Teile bezeichnet. Es heißt jedoch, daß das Wirbelrohr einen schlechten Wirkungsgrad hat und für die Kälteerzeugung heute noch keine technische Bedeutung besitzt.

Die Erfindung bezieht sich auch auf eine Vorrichtung zum Verschließen von Rohrleitungen durch örtlich begrenztes Einfrieren ihres Inhalts mittels einer an der Rohrleitung anbringbaren Kammer, die über eine Gaseintrittsöffnung mit einer Quelle eines Kühlmediums verbindbar ist und einen Innenraum aufweist, der zur Rohrleitung hin offen, zur Atmosphäre hin aber bis auf einen Gasauslaß geschlossen ist.

Zur Lösung der gleichen Aufgabe ist eine solche Vorrichtung erfindungsgemäß dadurch gekennzeichnet, daß die Quelle für das Kühlmedium eine Druckluftquelle und eine zwischen dieser und der Eintrittsöffnung der Kammer angeordnete Entspannungseinrichtung für die Druckluft ist.

In ganz besonders vorteilhafter Weise ist

a) die Entspannungseinrichtung ein Wirbelrohr mit einem an seinem einen Ende liegenden Kaltluftausgang, einem am entgegengesetzten Ende liegenden Warmluftausgang, einer zwischen den Enden liegenden Blende mit mindestens einem zwischen der Blende und dem Warmluftausgang tangential in das Rohr einmündenden Lufteintrittskanal, wobei der Kaltluftausgang auf der gegenüberliegenden Seite der Blende liegt, und weiterhin ist

b) der Kaltluftausgang des Wirbelrohres mit der Eintrittsöffnung der Kammer verbunden.

Die Erfindung besteht also in einer besonders vorteilhaften Form in der Verwendung eines an sich bekannten Wirbelrohres für einen neuen Zweck, nämlich für das Einfrieren von mediendurchströmten Rohrleitungen.

Es ist dabei weiterhin von Vorteil, wenn die Kammer auf ihrer Innenseite Leiteinrichtungen aufweist, durch die im Zusammenwirken mit der Rohr-Außenfläche die Kaltluft auf verlängerten Strömungswegen über die Rohr-Außenfläche geführt werden kann.

Durch die Verwendung eines Wirbelrohres, das mit der besagten Kammer verbunden wird, kann die Druckluft, die z.B. ein tragbarer Kleinkompressor liefert, vor dem Einströmen in die Gefriermanschette auf Temperaturen zwischen etwa -30 °C und -50 °C abgekühlt werden. Diese Abkühlung der Luft erfolgt ohne mechanische bewegte Teile und ohne Zuführen anderer Energien im Bereich des Wirbelrohres. Die abgekühlte Druckluft kühlt in der besagten Kammer das umschlossene Rohr und das darin enthaltene Wasser weit unter den Gefrierpunkt des Wassers ab, was zur Bildung des erforderlichen Eispfropfens und zum Verschluß des Rohres führt. Eine Belastung der Raumluft entfällt damit völlig. Für den Vorgang des Einfrierens von Rohren ist eine zusätzliche Raumlüftung nicht erforderlich, und die für den Kompressor benötigte elektrische Energie kann dem in Gebäuden regelmäßig vorhandenen Leitungsnetz entnommen werden.

Im Rahmen einer weiteren Fortbildung der Erfindung ist es ganz besonders zweckmäßig, im Warmluftausgang des Wirbelrohres eine einstellbare Strömungsdrossel für die Warmluftströmung anzuordnen.

Hierdurch ist es möglich, das Wirbelrohr hinsichtlich der Kälteleistung jeweils optimal einzustellen. Die Betriebspunkte eines solchen Wirbelrohres hinsichtlich minimaler Temperatur einerseits und maximaler Kälteleistung andererseits fallen nämlich nicht zusammen, so daß das Wirbelrohr wahlweise entweder auf eine minimale Lufttemperatur oder eine maximale Kälteleistung oder auf Zwischenwerte eingestellt werden kann.

Weiterhin ist es mit besonderem Vorteil möglich, die aus der Kammer bzw. Manschette austretende Kühlluft, die naturgemäß noch nicht die Temperatur der Umgebungsluft erreicht hat, wieder in den Kühlkreislauf, d.h. zum Kompressor zurückzuführen, oder sie einem Wärmetauscher zuzuleiten, durch den die dem Wirbelrohr zugeführte Kompressor-Luft bereits entsprechend vorgekühlt wird.

Weitere vorteilhafte Ausgestaltungen des Erfindungsgegenstandes ergeben sich aus den übrigen Unteransprüchen.

Ausführungsbeispiele des Erfindungsgegenstandes werden nachstehend anhand der Figuren 1 bis 7 näher erläutert.

Es zeigen:

Figur 1 die Verwendung einer Vorrichtung mit zwei Wirbelrohren und zwei Kammern an einem Heizungssystem,

Figur 2 eine Kammer in Form einer Manschette in einer perspektivischen Ansicht,

Figur 3 eine Kammer nach Figur 2 an einer Rohrleitung in baulicher Vereinigung mit einem Wirbelrohr,

Figur 4 die Anordnung nach Figur 3 im Schnitt und in vergrößertem Maßstab,

Figur 5 eine weitere Ausgestaltung des Gegenstandes nach den Figuren 3 und 4 mit einer Rückführung der Kaltluft zum Kompressor,

Figur 6 eine Seitenansicht eines Kompressors mit Druckbehälter sowie in baulicher Vereinigung mit einem Wirbelrohr und

Figur 7 einen Axialschnitt durch eine Rohrleitung mit aufgesetzter Kammer während des Betriebes.

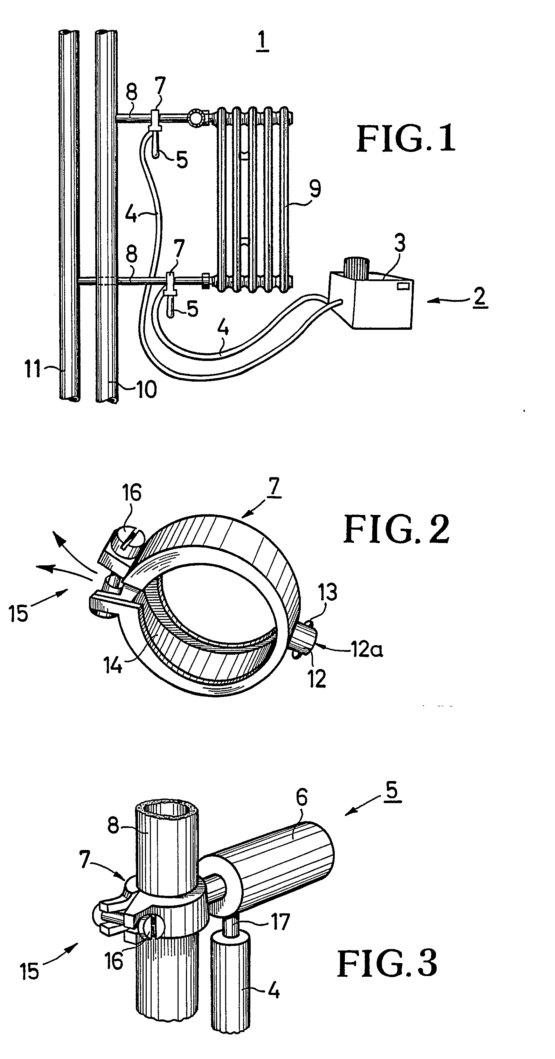

Das in Figur 1 dargestellte Rohr-Einfriergerät 1 besitzt eine Druckluftquelle 2 mit einem Kompressor 3. Die Druckluftquelle 2 ist mittels zweier Schläuche 4 mit zwei Entspannungseinrichtungen 5 verbunden, die als Wirbelrohre 6 ausgeführt sind. Die Wirbelrohre 6 sind wiederum an manschettenförmige Kammern 7 angeschlossen, die um Rohrleitungen 8 herumgelegt sind. Durch die Einfrierwirkung mittels der Kammern 7 kann ein Heizkörper 9 von einem Rohrnetz gelöst werden, das hier durch ein Steigrohr 10 und ein Fallrohr 11 angedeutet ist. Durch die Einfrierstellen im Bereich der Kammern 7 entfällt eine Entleerung des gesamten Systems.

Die Kammern 7 besitzen einen Anschlußstutzen 12 mit einer Gaseintrittsöffnung 12a, an die mittels formschlüssiger Verbindungselemente 13 der Kaltluftausgang des Wirbelrohrs 6 angeschlossen werden kann. In der Kammer 7 ist innenseitig ein umlaufender Kanal 14 ausgebildet, und im Bereich der Gasaustrittsöffnung 15 ist eine Spannschraube 16 vorgesehen, mittels der die Kammer 7 fest an der jeweiligen Rohrleitung 8 zur Anlage gebracht werden kann (Figuren 2 und 3).

In Figur 3 ist schematisch dargestellt, in welcher Weise eine Kammer 7 mit einem Wirbelrohr 6 an einer Rohrleitung 8 befestigt ist. Das Wirbelrohr 6 ist über einen Rohrstutzen 17 mit dem Schlauch 4 verbunden.

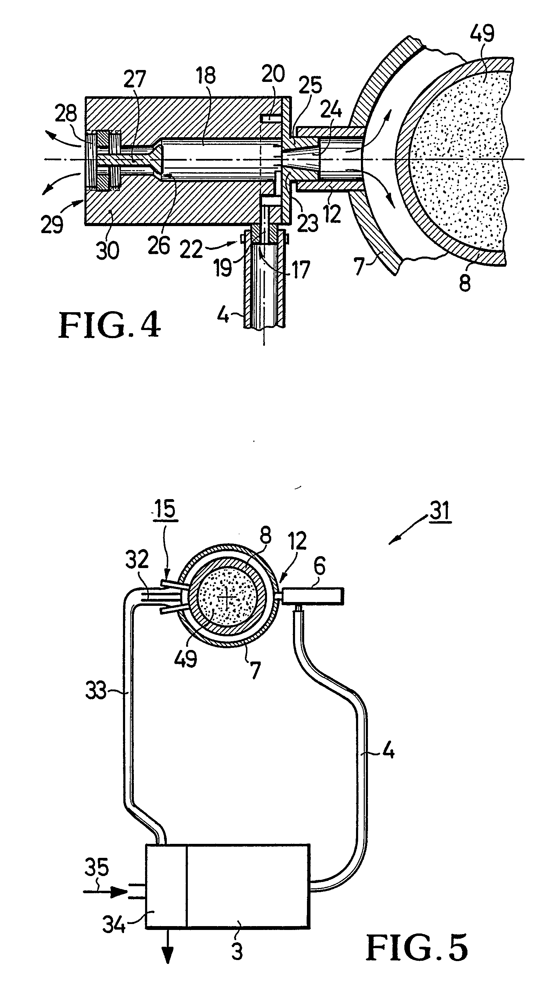

Einzelheiten des Wirbelrohres 6 gehen aus Figur 4 hervor, in der ein Teilausschnitt aus der Kammer 7 im Schnitt und an der Rohrleitung 8 anliegend dargestellt ist. Im Wirbelrohr 6 befindet sich eine Wirbelkammer 18, der über einen Einlaßkanal 19 Druckluft zugeführt wird. Der Einlaßkanal 19 mündet in einen Ringkanal 20, von dem aus wiederum zahlreiche nicht näher bezeichnete Spaltöffnungen in tangentialer Richtung in die Wirbelkammer 18 führen. Zum Einlaßkanal 19 gehört eingangsseitig der Rohrstutzen 17, auf dem der Schlauch 4 aufgeschoben und mittels einer Schlauchschelle 22 befestigt ist.

Die Wirbelkammer 18 ist an ihrem einen Ende von einer Blende 23 begrenzt, die sich zum Kaltluftaustritt 24 hin düsenförmig erweitert. Der Kaltluftaustritt 24 befindet sich am Ende eines Rohrstutzens 25, der in den Anschlußstutzen 12 der Kammer 7 eingesetzt ist.

Am entgegengesetzten Ende der Wirbelkammer 18 befindet sich ein Warmluftaustritt 26, der als einstellbarer Ringspalt ausgebildet ist und eine Drosselstelle darstellt, die sogenannte "Warmluftdrossel". Hierzu ist der Warmluftaustritt 26 mit einem Stellglied 27 versehen, das in eine Bohrung 28 am warmluftseitigen Ende 29 des Wirbelrohres 6 in dessen Gehäuse 30 eingeschraubt ist. Entsprechend der Steigung des Gewindes kann durch Drehen des Stellgliedes 27 der Austrittsquerschnitt der Warmluftdrossel verstellt werden.

Die Wirkung des Wirbelrohres beruht auf der Bildung eines starken Wirbels, dessen Achse mit der Achse der Wirbelkammer 18 zusammenfällt. Aus dem Druck- und Geschwindigkeitsfeld des Wirbels folgt, daß die Temperatur nach außen stark zunimmt. Die inneren Teile des Wirbels leisten durch ihre Abbremsung an den äußeren Teilen Arbeit. Die Austrittstemperaturen der Luft resultieren aus der Verteilung der Temperaturen. Die dem warmen Teil der Luft zugeführte Wärme ist gleich der dem kalten Teil entzogenen Wärme. Da die Luft mit Überschallgeschwindigkeit in das Rohr einströmt, erfolgt eine Abkühlung der Luft von Zimmertemperatur bis auf -50 °C, wobei am warmen Ende Temperaturen bis 200 °C auftreten können.

Bei dem Rohr-Einfriergerät 31 nach Figur 5 ist im Bereich der Gasaustrittsöffnung 15 der Kammer 7 ein Anschlußstutzen 32 vorgesehen, an dem ein Schlauch 33 befestigt ist. Der Schlauch 33 ist mit einem Vorkühler 34 verbunden, durch dessen Luftansaugöffnung 35 die vom Kompressor 3 zu verdichtende Luft angesaugt, vorgekühlt und dann in den Kompressor 3 eingeleitet wird. Hierdurch ist es möglich, den Wirbelrohren 6 bereits vorgekühlte Druckluft zuströmen zu lassen, so daß die Gefrierwirkung erhöht wird.

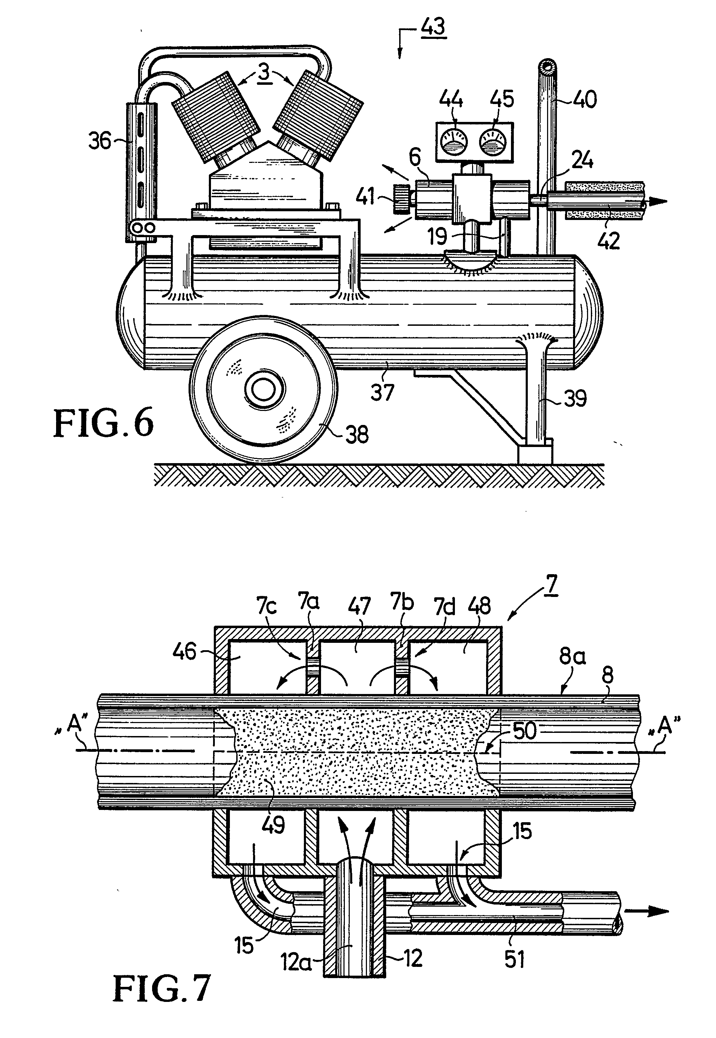

Figur 6 zeigt einen transportablen (fahrbaren) Kompressor 3 mit einer Kühleinrichtung 36 für die komprimierte Luft und einem Druckluftbehälter 37. Dieser Druckluftbehälter ist mit Rädern 38, einer Stütze 39 und einem Griffbügel 40 versehen. Mit dem Druckbehälter 37 ist ein Wirbelrohr 6 baulich vereinigt, dessen Einlaßkanal 19 unmittelbar mit dem Druckluftbehälter 37 verbunden ist. Das hier nicht gezeigte Stellglied 27 ist mit einem aus dem Gehäuse 30 des Wirbelrohres 6 herausragenden Einstellknopf 41 versehen. Der am entgegengesetzten Ende des Wirbelrohres befindliche Kaltluftausgang 24 ist über eine thermisch isolierte Schlauchleitung 42 mit mindestens einer in Figur 6 nicht dargestellten Kammer 7 verbunden. Im vorliegenden Fall wird nur ein Wirbelrohr benötigt, und die Kaltluftverteilung zu den einzelnen Kammern 7 erfolgt durch einen hier nicht gezeigten Verteiler.

Das Rohr-Einfriergerät 43 nach Figur 6 besitzt zusätzlich zwei Manometer 44 und 45 für die Erfassung der hier charakteristischen Drücke P1 und P2.

Figur 7 zeigt eine Kammer 7 mit einem besonders starken Kühleffekt. Die Kammer 7 ist in Richtung der Achse A-A der einzufrierenden Rohrleitung 8 durch Leiteinrichtungen 7a und 7b in drei durch Öffnungen 7c und 7b miteinander in Verbindung stehende Teilkammern 46, 47 und 48 unterteilt. Die Gaseintrittsöffnung 12a ist dabei der mittleren Teilkammer 47 zugeordnet, und die Gasaustrittsöffnungen 15 sind in den an den Enden liegenden Teilkammern 46 und 48 angeordnet. Dadurch wird erreicht, daß die entspannte Kaltluft mehrfach um die Rohrleitung herumgeführt wird. Es ist dabei zweckmäßig, die Kaltluft möglichst unmittelbar auf die Oberfläche 8a der Rohrleitung 8 zu richten. Durch den Abkühleffekt bildet sich im Innern der Rohrleitung 8 ein sogenannter Eispfropfen 49 aus, der die Rohrleitung 8 zuverlässig verschließt.

Um die Kammer 7 auf der Rohrleitung 8 anzubringen, ist sie in einer axialen Ebene geteilt ausgebildet und mit einem Scharnier versehen, was hier durch die gestrichelte Linie 50 angedeutet ist. Die Kammer 7 besteht also im Prinzip aus zwei Halbschalen. Die Gasaustrittsöffnungen 15 werden in einer gemeinsamen Sammelleitung 51 vereinigt.

## Ansprüche

1. Verfahren zum Verschließen von Rohrleitungen durch örtlich begrenztes Einfrieren ihres Inhalts mittels eines auf die Außenwand der Rohrleitung einwirkenden Kühlmediums, dadurch gekennzeichnet, daß man unter Druck stehende Luft auf eine Temperatur unterhalb des Gefrierpunktes des Inhaltes der Rohrleitung entspannt und die entspannte Luft auf die Außenwand der Rohrleitung richtet.

2. Verfahren nach Anspruch 1, dadurch gekennzeichnet, daß man der Umgebung der Rohrleitung Luft entnimmt, diese auf einen Druck P1 verdichtet, der ausreicht, um bei der Entspannung der abgekühlten Luft auf einen darunter liegenden Druck P2 den Gefrierpunkt des Inhalts der Rohrleitung zu unterschreiten, der verdichteten Luft Wärme entzieht und sie nachfolgend auf den Druck P2 entspannt und auf die Außenwand der Rohrleitung richtet.

3. Verfahren nach Anspruch 1, dadurch gekennzeichnet, daß man die verdichtete und abgekühlte Luft zunächst im wesentlichen tangential in ein Wirbelrohr mit einem Kaltluftausgang in Form einer Blende und einem Warmluftausgang leitet und in diesem zumindest überwiegend entspannt, wobei ein Teil der entspannten Luft durch Wärmeabgabe an den übrigen Teil der entspannten Luft weiter abgekühlt und durch die Blende und den Kaltluftausgang der einzufrierenden Rohrleitung zugeführt und der übrige, durch eine entsprechende Wärmeaufnahme aufgeheizte Teil der Luft durch den Warmluftausgang abgeführt wird.

4. Verfahren nach mindestens einer der Ansprüche 1 bis 3, dadurch gekennzeichnet, daß man die entspannte Kaltluft in einer die Rohrleitung umgebenden Kammer unter innigem Wärmeaustausch mit der Rohraußenwand um die Rohrleitung herumführt.

5. Verfahren nach Anspruch 4, dadurch gekennzeichnet, daß man die entspannte Kaltluft mehrfach um die Rohrleitung herumführt.

6. Verfahren nach Anspruch 2, dadurch gekennzeichnet, daß man die von der einzufrierenden Rohrleitung nach dem Wärmeaustausch wegströmende Kaltluft auffängt, erneut verdichtet, ihr Wärme entzieht, sie entspannt und sie im Kreislauf zur Rohrleitung zurückführt.

7. Vorrichtung zum Verschließen von Rohrleitungen durch örtlich begrenztes Einfrieren ihres Inhalts mittels einer an der Rohrleitung anbringbaren Kammer, die über eine Gaseintrittsöffnung mit einer Quelle eines Kühlmediums verbindbar ist und einen Kanal aufweist, der zur Rohrleitung hin offen, zur Atmosphäre hin aber bis auf eine Gasaustrittsöffnung geschlossen ist, dadurch gekennzeichnet, daß die Quelle für das Kühlmedium eine Druckluftquelle (2) und eine zwischen dieser und der Eintrittsöffnung (12a) der Kammer (7) angeordnete Entspannungseinrichtung (5) für die Druckluft ist.

8. Vorrichtung nach Anspruch 7, dadurch gekennzeichnet, daß die Druckluftquelle (2) einen Kompressor (3) aufweist.

9. Vorrichtung nach Anspruch 7, dadurch gekennzeichnet, daß

a) die Entspannungseinrichtung (5) ein Wirbelrohr (6) mit einem an seinem einen Ende liegenden Kaltluftausgang (24), einem am entgegengesetzten Ende liegenden Warmluftausgang (26), einer zwischen den Enden liegenden Blende (23) und mit mindestens einem zwischen der Blende und dem Warmluftausgang tangential in das Rohr einmündenden Lufteintrittskanal aufweist, wobei der Kaltluftausgang (24) auf der gegenüberliegenden Seite der Blende liegt, und daß

b) der Kaltluftausgang (24) des Wirbelrohres mit der Gaseintrittsöffnung (12a) der Kammer (7) verbunden ist.

10. Vorrichtung nach Anspruch 9, dadurch gekennzeichnet, daß der Summenquerschnitt "Q" des mindestens einen tangentialen Lufteintrittskanals im Verhältnis zu den Querschnitten der übrigen Strömungskanäle so gewählt ist, daß an dieser Stelle ein wesentlicher Teil der Druckdifferenz zwischen $P_1$ und $P_2$ abgebaut wird.

11. Vorrichtung nach Anspruch 9, dadurch gekennzeichnet, daß das Wirbelrohr (6) in unmittelbarer Nähe der Kammer (7) angeordnet und sein Druckluft-Einlaßkanal (19) über einen Druckschlauch (4) mit der Druckluftquelle (2) verbunden ist.

12. Vorrichtung nach Anspruch 9, dadurch gekennzeichnet, daß das Wirbelrohr (6) baulich mit der Druckluftquelle (2) vereinigt und sein Kaltluftausgang (24) über eine thermisch isolierte Schlauchleitung (42) mit der Kammer (7) verbunden ist.

13. Vorrichtung nach Anspruch 9, dadurch gekennzeichnet, daß im Warmluftausgang (26) ein Stellglied (27) als einstellbare Warmluftdrossel angeordnet ist.

14. Vorrichtung nach Anspruch 8, dadurch gekennzeichnet, daß die Gasaustrittsöffnung (15) der Kammer (7) mittels eines Schlauches (33) zur Saugseite des Kompressors (3) zurückgeführt ist.

15. Vorrichtung nach Anspruch 14, dadurch gekennzeichnet, daß dem Kompressor (3) eine Kühleinrichtung (34) für die Luft zugeordnet ist.

16. Vorrichtung nach Anspruch 7, dadurch gekennzeichnet, daß die Kammer (7) auf ihrer Innenseite Leiteinrichtungen (7a, 7b) aufweist, durch die im Zusammenwirken mit der Rohr-Außenfäche (8a) die Kaltluft auf verlängerten Strömungswegen über die Rohr-Außenfläche führbar ist.

17. Vorrichtung nach Anspruch 16, dadurch gekennzeichnet, daß die Kammer (7) in Richtung der Rohrachse "A" durch die Leiteinrichtungen (7a, 7b) in mehrere, durch Öffnungen miteinander in Verbindung stehende Teilkammern (46, 47, 48) unterteilt ist, daß die Gaseintrittsöffnung (12a) für die Kaltluft einer der in der Mitte liegenden Teilkammern (47) zugeordnet ist und daß die Gasaustrittsöffnungen (15) in den an den Enden liegenden Teilkammern (46, 48) angeordnet sind.

FIG.1

FIG.2

FIG.3

FIG.4

FIG.5

FIG.6

FIG.7